(19) **Europäisches Patentamt**
**European Patent Office**
**Office européen des brevets**

(11) **EP 2 770 223 B1**

(12) **EUROPEAN PATENT SPECIFICATION**

(45) Date of publication and mention
of the grant of the patent:
**12.08.2015 Bulletin 2015/33**

(51) Int Cl.:
*F16C 39/02* (2006.01)     *F16C 32/04* (2006.01)
*H02K 7/08* (2006.01)     *H02K 7/09* (2006.01)

(21) Application number: **14155715.7**

(22) Date of filing: **19.02.2014**

(54) **A machine provided with safety bearing**

Maschine mit Sicherheitslager

Machine pourvue de palier de secours

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.02.2013 FI 20135151**
**01.03.2013 EP 13157420**

(43) Date of publication of application:
**27.08.2014 Bulletin 2014/35**

(73) Proprietor: **Sulzer Pump Solutions AB**
**211 21 Malmö (SE)**

(72) Inventors:
• **Lantto, Erkki**
**00130 Helsinki (FI)**

• **Tommila, Ville**
**00500 Helsinki (FI)**
• **Palko, Marko Petteri**
**02940 Espoo (FI)**

(74) Representative: **Intellectual Property Services
GmbH
Langfeldstrasse 88
8500 Frauenfeld (CH)**

(56) References cited:
**EP-A2- 1 085 224     WO-A1-2012/152539
JP-A- S63 289 317**

## Description

### Field of the invention

The invention relates to a machine comprising a rotor, a stator, main bearings for supporting the rotor rotatably with respect to the stator, and at least one safety bearing for supporting the rotor rotatably with respect to the stator in a situation where the main bearings are non-operating.

### Background

In some cases there is a need to provide a rotating machine with safety bearings in addition to main bearings. The main bearings are arranged to rotatably support the rotor of the machine during normal operation, and the safety bearings are arranged to rotatably support the rotor when the main bearings are non-operating. The machine can be, for example, a turbomachine which can be e.g. a turboblower, a turbocompressor or a pump, and the main bearings can be for example contactless magnetic bearings. When the magnetic bearings become non-operating, e.g. due to an electrical power cut, the rotor is dropped to be supported by the safety bearings. It is also possible that the magnetic bearings are non-operating in the sense that they are still active but their load capacity is exceeded. Also in this case, the safety bearings have to support the rotor. Typically, there are radial and axial clearances between the rotor and the safety bearings when the rotor is supported by the main bearings in order that the safety bearings would not disturb the normal operation of the machine.

The above-mentioned radial clearance allows the rotor to whirl when being supported by the safety bearings. For example, when the safety bearings are ball bearings, the rotor typically goes into cylindrical forward whirling motion when dropped to be supported by the safety bearings. This whirling motion produces high centrifugal forces which stress the mechanical structures of the machine.

Publication US4629261 describes a safety and centering device for a rotor supported by contactless magnetic bearings. The safety and centering device provides centering support for the rotor if the contactless magnetic bearings loose power. The rotor shaft comprises a collar with a conical friction surface, and the safety bearing comprises a sleeve controlled by an electro magnet with counteracting springs and also having a conical friction surface. In a case of power failure, the springs force the two conical surfaces together and provide centering support for the rotor. The conical angle of the conical surfaces has to be relatively small so as to provide appropriate centering effect. In the examples shown in US4629261 the coning angle is about 30 degrees, where the coning angle is the angle between the conical surface and the axis of the rotational symmetry of the conical surface. A challenge related to the technical solution described in US4629261 is that it requires a good alignment between the rotational axis determined by the above-described centering effect and the principal moment of inertia of the rotor because otherwise high centrifugal forces may occur.

WO 2012/152539 A1 discloses a safety bearing having a conical angle of 75°-80°.

### Summary

The following presents a simplified summary in order to provide a basic understanding of some aspects of the invention. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention there is provided a machine comprising:

- a rotor and a stator,

- main bearings for supporting the rotor rotatably with respect to the stator, and

- at least one safety bearing for supporting the rotor rotatably with respect to the stator in a situation where the main bearings are non-operating.

There are a radial clearance and an axial clearance between the rotor and the safety bearing when the rotor is supported by the main bearings. A contact surface of the rotor arranged to contact the safety bearing in response to closure of the axial clearance is oblique with respect to a spatial plane perpendicular to a rotational axis of the rotor so that an angle between the rotational axis of the rotor and the normal of the contact surface at a point of contact between the rotor and the safety bearing is greater than zero and at most 5 degrees. Therefore, in an exemplifying case where the contact surface of the rotor is conical, the coning angle is and at least 85 degrees. Thus, the conical shape of the contact surface is so blunt that the centering effect provided by the conical shape when the rotor is pushed against the safety bearing is so small that the rotor is allowed, even though not forced, to rotate around its principal moment of inertia. In conjunction with the present invention, it has been surprisingly noticed that the above-described obliqueness of the contact surface eliminates at least partly an excitation for whirling motion when the rotor is supported by the safety bearings.

A number of non-limiting and exemplifying embodiments of the invention are described in accompanied dependent claims.

Various non-limiting and exemplifying embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of unrecited features. The features recited in the dependent claims are mutually freely combinable unless other-wise explicitly stated.

**Brief description of the figures**

Exemplifying embodiments of the invention and their advantages are explained in greater detail below in the sense of examples and with reference to the accompanying drawings, in which:

figure 1 shows a schematic illustration of a part of a machine according to an exemplifying embodiment of the invention,

figure 2a illustrates behaviour of a safety bearing system according to the prior art, and figure 2b illustrates behaviour of a safety bearing system according to an exemplifying embodiment of the invention,

figure 3 shows a schematic illustration of a part of a machine according to an exemplifying embodiment of the invention, and

figure 4 shows a schematic illustration of a machine according to an exemplifying embodiment of the invention.

**Description of the exemplifying embodiments**

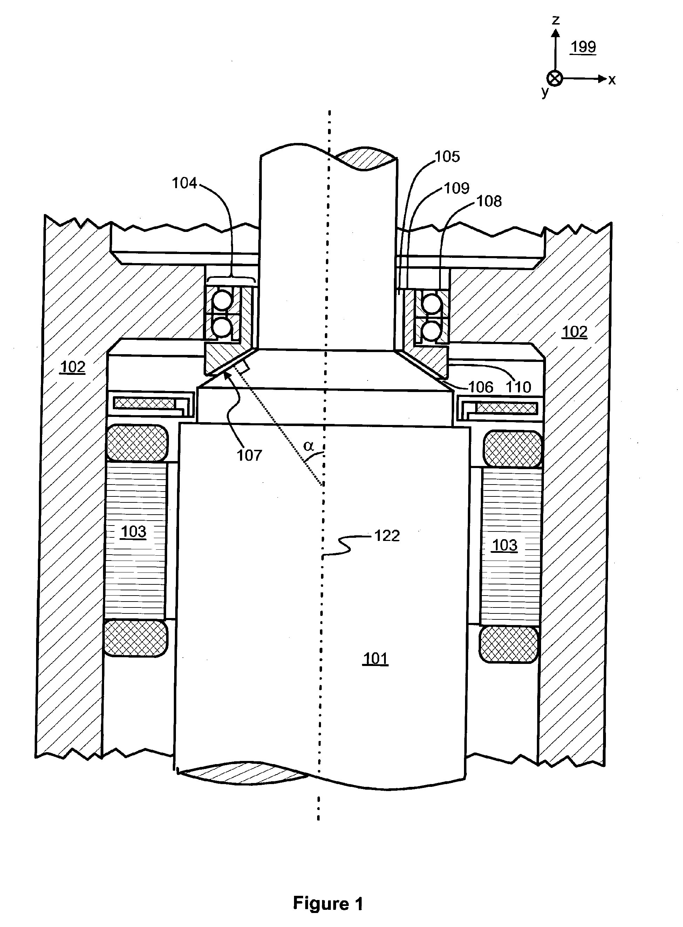

Figure 1 shows a schematic illustration of a part of a machine according to an exemplifying embodiment of the invention. The machine comprises a rotor 101, a stator 102, and main bearings 103 for supporting the rotor rotatably with respect to the stator. The machine can be, for example, an electrical machine, and the rotor 101 can be a rotor of the electrical machine and the stator 102 can be a stator of the electrical machine. In the exemplifying case illustrated in figure 1, the main bearings are contactless magnetic bearings. The machine comprises a safety bearing 104 for supporting the rotor 101 rotatably with respect to the stator 102 in a situation where the main bearings 103 are non-operating for example due to an electrical power cut. During the normal operation when the rotor 101 is supported by the main bearings 103, there are a radial clearance 105 and an axial clearance 106 between the rotor and the safety bearing 104 in order that the safety bearing would not disturb the normal operation of the machine. A contact surface 107 of the rotor arranged to contact the safety bearing in response to closure of the axial clearance 106 is oblique with respect to a spatial plane perpendicular to a rotational axis 122 of the rotor so that an angle $\alpha$ between the rotational axis of the rotor and a normal of the contact surface 107 at a point of contact between the rotor and the safety bearing is greater than zero and at most 5 degrees. The contact surface 107 of the rotor is oblique with respect to the spatial plane so that the point of contact moves, in the axial direction, towards the safety bearing 104 when the point of contact moves, in the radial direction, towards the rotational axis 122 of the rotor. In other words, the contact surface 107 tapers towards the safety bearing 104. The rotational axis 122 of the rotor is parallel with the z-axis of a coordinate system 199 and the above-mentioned spatial plane is parallel with the xy-plane of the coordinate system 199. The angle $\alpha$ can be for example:

$$C1 < \alpha \leq C2,$$

where C1 is one of the following: 0, 1, 2, 3, 4 degrees and C2 is one of the following so that C2 > C1: 1, 2, 3, 4, 5 degrees.

More preferably C1 is one of the following: 0, 1, 2, 3, or 4 degrees and C2 is one of the following so that C2 > C1: 1, 2, 3, 4, or 5 degrees.

The angle $\alpha$ is selected so that the tapering shape of the contact surface 107 is so blunt that the centering effect provided by the tapering shape when the rotor is pushed against the safety bearing 104 is so small that the rotor is allowed to rotate around its principal moment of inertia. An advantageous value or range for the angle $\alpha$ can be found out with simulations and/or with experiments.

In the exemplifying case illustrated in figure 1, the contact surface 107 of the rotor is conical so that the angle $\alpha$ is substantially constant when the point of contact is moved towards or away from the rotational axis 122 of the rotor, i.e. the angle $\alpha$ is substantially constant on the contact surface 107. The conical shape of the contact surface 107 is so blunt that the centering effect provided by the conical shape when the rotor is pushed against the safety bearing 104 is so small that the rotor is allowed to rotate around its principal moment of inertia. Furthermore, when the angle $\alpha$ is small so that the angle $\alpha$ is at most few degrees e.g. 5 degrees, e.g. the angle $\alpha$ is about 1 degree, it is practically possible to design the radial clearance 105 and the axial clearance 106 substantially independently of each other. The rotor can be pushed against the safety bearing 104 for example by aerodynamic forces acting on an impeller driven by the rotor.

In a machine according to an exemplifying embodiment of the invention, the safety bearing 104 comprises a rolling contact bearing 108 comprising an outer ring supported by a frame of the machine, a rotatable inner ring, and rolling elements between the inner and outer rings. The rolling contact bearing 108 can comprise, for example, one or more ball bearings arranged to be capable of carrying axial load. In the exemplifying case illustrated in figure 1, the rolling contact bearing comprises two ball bearings arranged to be capable of carrying axial load in both directions.

In a machine according to an exemplifying embodiment of the invention, the safety bearing 104 comprises a sleeve element comprising a first part 109 being radially between the inner ring and the rotor and a second part 110 being axially between the rolling contact bearing and the contact surface 107 of the rotor. The second part 110 comprises a surface getting in contact with the rotor in response to closure of the axial clearance 106.

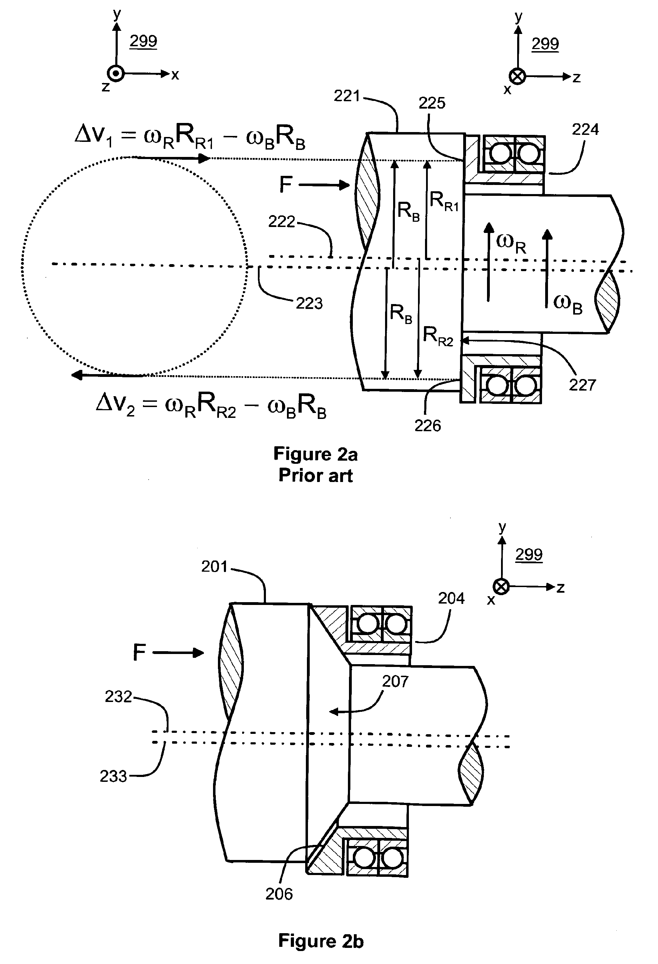

The above-described obliqueness of the contact surface 107 of the rotor eliminates at least partly an excitation for whirling motion when the rotor is supported by the safety bearing 104. This effect is illustrated below with reference to figures 2a and 2b, where figure 2a illustrates behaviour of a safety bearing system according to the prior art and figure 2b illustrates behaviour of a safety bearing system according to an exemplifying embodiment of the invention

Figure 2a illustrates a case where a rotor 221 is pushed by force F in the axial direction against a safety bearing 224. The axial direction is parallel with the z-axis of a coordinate system 299. For illustrative purposes, we assume that the rotational axis 222 of the rotor has moved in the positive y-direction of the coordinate system 299 away from the rotational axis 223 of the safety bearing. Furthermore, we assume that the rotational speed of the rotor is $\omega_R$ and the rotational speed of the safety bearing is $\omega_B$. In a contact point 225, a speed difference $\Delta v_1$ between the rotor and the safety bearing is:

$$\Delta v_1 = \omega_R R_{R1} - \omega_B R_B, \tag{1}$$

where $R_{R1}$ is the distance from the rotational axis 222 of the rotor to the contact point 225 and $R_B$ is the distance from the rotational axis 223 of the safety bearing to the contact point 225. In a contact point 226, a speed difference $\Delta v_2$ between the rotor and the safety bearing is:

$$\Delta v_2 = \omega_R R_{R2} - \omega_B R_B, \tag{2}$$

where $R_{R2}$ is the distance from the rotational axis 222 of the rotor to the contact point 226.

In a case where the rotational speeds $\omega_R$ and $\omega_B$ happen to be adapted so that there is practically no slip in the contact point 225, i.e. $\Delta v_1 \approx 0$, there is slip in the contact point 226, i.e. $\Delta v_2 \neq 0$. The slip in the contact point 226 causes a force parallel to the x-axis of the coordinate system 229. This force may represent excitation for whirling motion of the rotor 221. Correspondingly, when the rotational speeds $\omega_R$ and $\omega_B$ happen to be adapted so that there is practically no slip in the contact point 226, i.e. $\Delta v_2 \approx 0$, there is slip in the contact point 225, i.e. $\Delta v_1 \neq 0$. This slip causes a force that may represent excitation for the whirling motion. The direction of the force is typically such that it causes forward whirling motion. Actually, when $R_{R1} \neq R_{R2}$, both $\Delta_{v1}$ and $\Delta v_2$ can be zero if and only if $\omega_R = \omega_B = 0$, because the equation pair constituted by the equations (1) and (2) has a non-zero determinant.

Figure 2b illustrates a case where a rotor 201 according to an exemplifying embodiment of the invention is pushed by force F in the axial direction against a safety bearing 204. For illustrative purposes we assume that the rotational axis 232 of the rotor has moved in the positive y-direction of the coordinate system 299 away from the rotational axis 233 of the safety bearing. Due to the conical shape of the contact surface 207, there is a clearance 206 between the contact surface 207 and the safety bearing. Therefore, the rotational speeds of the rotor 201 and the safety bearing 204 can adapt themselves so that there is no slip in the contact between the safety bearing and the rotor. Hence, the situation related to the prior art and illustrated with reference to figure 2a can be avoided. In the situation related to the prior art and illustrated with reference to figure 2a, there is always at least one contact with slip if the rotational axis 222 of the rotor 221 has moved with respect to the rotational axis 223 of the safety bearing 224.

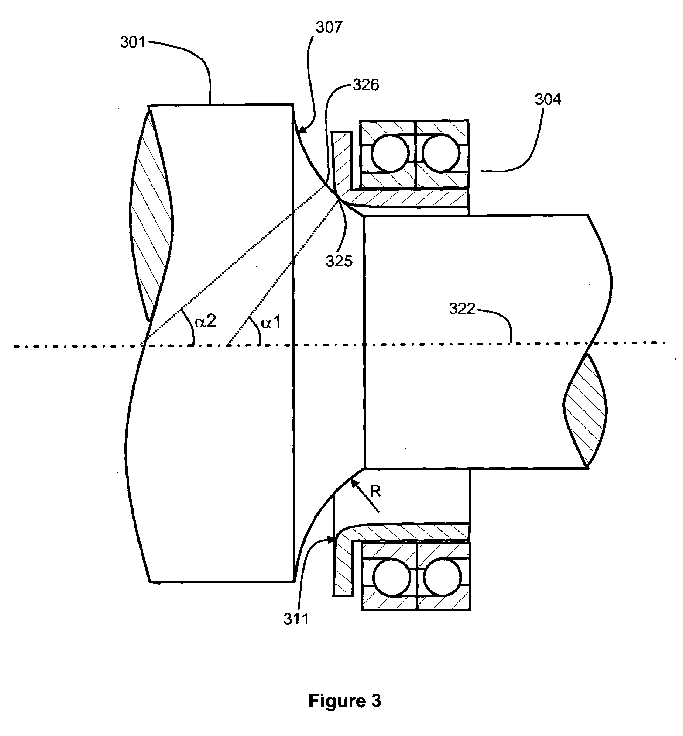

The contact surface of the rotor arranged to contact the safety bearing in response to closure of the axial clearance does not necessarily have to be conical. This is illustrated in figure 3 which shows a schematic illustration of a part of a machine according to an exemplifying embodiment of the invention.

In the exemplifying case illustrated in figure 3, the profile of the contact surface 307 of the rotor 301 is concave so that the angle between the normal of the contact surface and the rotational axis 322 of the rotor increases when the point of contact is moved towards the rotational axis 322 of the rotor. In the situation illustrated in figure 3, the safety bearing 304 contacts the rotor 301 at the point of contact 325 and the angle between the rotational axis 322 and the normal of the contact surface at the point of contact 325 is $\alpha1$. If the safety bearing 304 contacted the rotor 301 at a point 326 that is farther from the rotational axis 322 than the point of contact 325, the corresponding angle would be $\alpha2$ that is smaller than $\alpha1$.

In a machine according to an exemplifying embodiment of the invention, the profile of the contact surface 307 of the rotor is an arc of a first circle having radius R.

In a machine according to an exemplifying embodiment of the invention, a profile of a contact surface 311 of the safety bearing 304 is an arc of a second circle having a radius smaller than R as illustrated in figure 3.

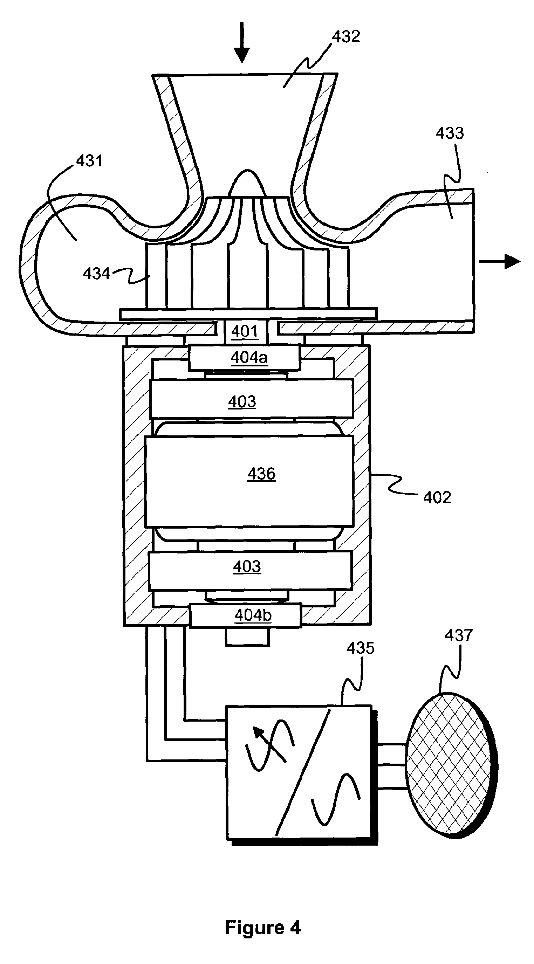

Figure 4 shows a schematic illustration of a machine according to an exemplifying embodiment of the invention. The machine comprises an electrical motor, a chamber 431 having an inlet 432 and an outlet 433 for fluid to be moved, and an impeller 434 placed in the chamber for moving the fluid. The electrical motor is fed with a converter 435 that is connected to an electric power network 437. The electrical motor can be, for example, an induction motor, a permanent magnet synchronous motor, a brushless dc-motor, or a reluctance motor. The electrical motor comprises a stator 402 and a rotor 401 connected to the impeller 434. The stator 402 comprises main bearings 403 for supporting the rotor rotatably with respect to the stator, a stator core structure 436 including stator windings, and safety bearings 404a and 404b for supporting the rotor 401 rotatably with respect to the stator in a situation where the main bearings 403 are non-operating. The main bearings 403 can be, for example, contactless magnetic bearings. In the exemplifying machine illustrated in figure 4, the impeller 434 is directly connected to the rotor 401 of the electrical motor. However, it is also possible to have a gear between the impeller and the motor driving the impeller. The electrical motor can be, for example but not necessarily, a high speed induction motor having a solid rotor. In this document, the term "high speed" means that the rotational speed of the motor is more than 5000 rpm.

During the normal operation when the rotor 401 is supported by the main bearings 403, there are a radial clearance and an axial clearance between the rotor and the safety bearings 404a and 404b in order that the safety bearings would not disturb the normal operation of the machine. A contact surface of the rotor arranged to contact the safety bearing in response to closure of the axial clearance is oblique with respect to a spatial plane perpendicular to a rotational axis of the rotor so that an angle between the rotational axis of the rotor and the normal of the contact surface at a point of contact between the rotor and the safety bearing is greater than zero and at most 5 degrees.

The specific examples provided in the description given above should not be construed as limiting the applicability and/or the interpretation of the appended claims.

**Claims**

**1.** A machine comprising:

- a rotor (101, 301, 401) and a stator (102, 402),
- main bearings (103, 403) for supporting the rotor rotatably with respect to the stator, and
- at least one safety bearing (104, 304, 404a, 404b) for supporting the rotor rotatably with respect to the stator in a situation where the main bearings are non-operating,

wherein there are a radial clearance (105) and an axial clearance (106) between the rotor and the safety bearing when the rotor is supported by the main bearings, **characterized in that** a contact surface (107, 307) of the rotor arranged to contact the safety bearing in response to closure of the axial clearance is oblique with respect to a spatial plane perpendicular to a rotational axis of the rotor so that an angle ($\alpha$) between the rotational axis of the rotor and a normal of the contact surface at a point of contact between the rotor and the safety bearing is greater than zero and at most 5 degrees.

2. A machine according to claim 1, wherein the contact surface (107) of the rotor is oblique with respect to the spatial plane so that the point of contact moves, in an axial direction, towards the safety bearing when the point of contact moves, in a radial direction, towards the rotational axis of the rotor.

3. A machine according to claim 1 or 2, wherein the angle ($\alpha$) is greater than C1 and at most C2, where C1 is one of the following 0, 1, 2, 3, or 4 degrees and C2 is one of the following so that C2 > C1: 1, 2, 3, 4, or 5 degrees.

4. A machine according to any of claims 1-3, wherein the contact surface (107) of the rotor is conical so that the angle is substantially constant when the point of contact is moved towards or away from the rotational axis of the rotor.

5. A machine according to any of claims 1-3, wherein a profile of the contact surface (307) of the rotor is concave so that the angle increases when the point of contact is moved towards the rotational axis of the rotor.

6. A machine according to claim 5, wherein the profile of the contact surface (307) of the rotor is an arc of a first circle.

7. A machine according to claim 6, wherein a profile of a contact surface (311) of the safety bearing is an arc of a second circle having a smaller radius than the first circle, the contact surface of the safety bearing being arranged to contact the rotor in response to closure of the axial clearance.

8. A machine according to any of claims 1-7, wherein the safety bearing (104) comprises a rolling contact bearing (108) comprising an outer ring supported by a frame of the machine, a rotatable inner ring, and rolling elements between the inner and outer rings.

9. A machine according to claim 8, wherein the safety bearing comprises one or more ball bearings arranged to be capable of carrying axial load.

10. A machine according to claim 8 or 9, wherein the safety bearing comprises a sleeve element comprising:

   - a first part (109) being radially between the inner ring and the rotor, and
   - a second part (110) being axially between the rolling contact bearing and the contact surface (107) of the rotor,

   the second part having a surface getting in contact with the rotor in response to closure of the axial clearance.

11. A machine according to any of claims 1-10, wherein the main bearings (103) are contactless magnetic bearings.

12. A machine according to any of claims 1-11, wherein the machine is an electrical machine and the rotor is a rotor of the electrical machine and the stator is a stator of the electrical machine.

13. A machine according to any of claims 1-12, wherein the machine comprises:

   - a chamber (431) having an inlet (432) and an outlet (433) for fluid to be moved, and
   - an impeller (434) connected to the rotor (401) and placed in the chamber for moving the fluid.

**Patentansprüche**

1. Maschine, umfassend:

   - einen Rotor (101, 301, 401) und einen Stator (102, 402),
   - Hauptlager (103, 403) zum drehbaren Lagern des Rotors mit Bezug auf den Stator, und
   - zumindest ein Sicherheitslager (104, 304, 404a, 404b) zum drehbaren Lagern des Rotors mit Bezug auf den Stator in einer Situation, in der die Hauptlager nicht arbeiten,

   wobei es einen radialen Zwischenraum (105) und einen axialen Zwischenraum (106) zwischen dem Rotor und dem Sicherheitslager gibt, wenn der Rotor durch die Hauptlager gelagert ist,
   **dadurch gekennzeichnet, dass** eine Kontaktfläche (107, 307) des Rotors, die eingerichtet ist, um in Ansprechen auf ein Schließen des axialen Zwischenraumes mit dem Sicherheitslager in Kontakt zu gelangen, schräg mit Bezug auf eine räumliche Ebene senkrecht zu der Drehachse des Rotors ist, so dass einen Winkel ($\alpha$) zwischen der

Drehachse des Rotors und einer Senkrechten der Kontaktfläche an einem Kontaktpunkt zwischen dem Rotor und dem Sicherheitslager größer als Null und höchstens 5 Grad ist.

2. Maschine nach Anspruch 1, wobei die Kontaktfläche (107) des Rotors schräg mit Bezug auf die räumliche Ebene ist, so dass der Kontaktpunkt sich in einer axialen Richtung zu dem Sicherheitslager hin bewegt, wenn sich der Kontaktpunkt in einer radialen Richtung zu der Drehachse des Rotors hin bewegt.

3. Maschine nach Anspruch 1 oder 2, wobei der Winkel ($\alpha$) größer als C1 und höchstens C2 ist, wobei C1 einer der folgenden ist: 0, 1, 2, 3 oder 4 Grad, und C2 einer der folgenden, so dass C2 > C1, ist: 1, 2, 3, 4 oder 5 Grad.

4. Maschine nach einem der Ansprüche 1-3, wobei die Kontaktfläche (107) des Rotors konisch ist, so dass der Winkel im Wesentlichen konstant ist, wenn der Kontaktpunkt auf die Drehachse des Rotors zu oder von dieser weg bewegt wird.

5. Maschine nach einem der Ansprüche 1-3, wobei ein Profil der Kontaktfläche (307) des Rotors konkav ist, so dass der Winkel zunimmt, wenn der Kontaktpunkt zu der Drehachse des Rotors hin bewegt wird.

6. Maschine nach Anspruch 5, wobei das Profil der Kontaktfläche (307) des Rotors ein Bogen eines ersten Kreises ist.

7. Maschine nach Anspruch 6, wobei ein Profil einer Kontaktfläche (311) des Sicherheitslagers ein Bogen eines zweiten Kreises ist, der einen kleineren Radius als der erste Kreis aufweist, wobei die Kontaktfläche des Sicherheitslagers derart eingerichtet ist, dass sie in Ansprechen auf ein Schließen des axialen Zwischenraums mit dem Rotor in Kontakt gelangt.

8. Maschine nach einem der Ansprüche 1-7, wobei das Sicherheitslager (104) ein Wälzkontaktlager (108) umfasst, das einen Außenring, der durch einen Rahmen der Maschine abgestützt ist, einen drehbaren Innenring und Wälzelemente zwischen dem Innen- und Außenring umfasst.

9. Maschine nach Anspruch 8, wobei das Sicherheitslager ein oder mehrere Kugellager umfasst, die derart eingerichtet sind, dass sie einen axiale Last tragen können.

10. Maschine nach Anspruch 8 oder 9, wobei das Sicherheitslager ein Hülsenelement umfasst, umfassend:

   - einen ersten Teil (109), der sich radial zwischen dem Innenring und dem Rotor befindet, und
   - einen zweiten Teil (110), der sich axial zwischen dem Wälzkontaktlager und der Kontaktfläche (107) des Rotors befindet,

   wobei der zweite Teil eine Oberfläche aufweist, die in Ansprechen auf ein Schließen des axialen Zwischenraums mit dem Rotor in Kontakt gelangt.

11. Maschine nach einem der Ansprüche 1-10, wobei die Hauptlager (103) kontaktlose Magnetlager sind.

12. Maschine nach einem der Ansprüche 1-11, wobei die Maschine eine elektrische Maschine ist und der Rotor ein Rotor der elektrischen Maschine ist, und der Stator ein Stator der elektrischen Maschine ist.

13. Maschine nach einem der Ansprüche 1-12, wobei die Maschine umfasst:

   - eine Kammer (431), die einen Einlass (432) und einen Auslass (433) für zu bewegendes Fluid aufweist, und
   - ein Flügelrad (434), das zum Bewegen des Fluids mit dem Rotor (401) verbunden und in der Kammer angeordnet ist.


**Revendications**

1. Machine comprenant :

   - un rotor (101, 301, 401) et un stator (102, 402),
   - des paliers principaux (103, 403) pour supporter le rotor d'une manière tournante relativement au stator, et

- au moins un palier de sécurité (104, 304, 404a, 404b) pour supporter le rotor d'une manière tournante par rapport au stator dans une situation où les paliers principaux sont non-opérants,

où il y a un jeu radial (105) et un jeu axial (106) entre le rotor et le palier de sécurité lorsque le rotor est supporté par les paliers principaux,
**caractérisée en ce qu'**une surface de contact (107, 307) du rotor agencée pour venir en contact avec le palier de sécurité en réponse à la fermeture du jeu axial est oblique relativement à un plan spatial perpendiculaire à un axe de rotation du rotor de sorte qu'un angle ($\alpha$) entre l'axe de rotation du rotor et une normale de la surface de contact à un point de contact entre le rotor et le palier de sécurité est plus grand que zéro et est au plus de 5 degrés.

2. Machine selon la revendication 1, dans laquelle la surface de contact (107) du rotor est oblique relativement au plan spatial de sorte que le point de contact se déplace, dans une direction axiale, vers le palier de sécurité lorsque le point de contact se déplace, dans une direction radiale, vers l'axe de rotation du rotor.

3. Machine selon la revendication 1 ou 2, dans laquelle l'angle ($\alpha$) est plus grand que C1 et au plus C2, où C1 est un des suivants 0, 1, 2, 3 ou 4 degrés et C2 est un des suivants de sorte que C2 > C1 :1, 2, 3, 4 ou 5 degrés.

4. Machine selon l'une quelconque des revendications 1 à 3, dans laquelle la surface de contact (107) du rotor est conique de sorte que l'angle est sensiblement constant lorsque le point de contact est déplacé vers ou au loin de l'axe de rotation du rotor.

5. Machine selon l'une quelconque des revendications 1 à 3, dans laquelle un profil de la surface de contact (307) du rotor est concave de sorte que l'angle augmente lorsque le point de contact est déplacé vers l'axe de rotation du rotor.

6. Machine selon la revendication 5, dans laquelle le profil de la surface de contact (307) du rotor est un arc d'un premier cercle.

7. Machine selon la revendication 6, dans laquelle un profil d'une surface de contact (311) du palier de sécurité est un arc d'un deuxième cercle ayant un plus petit rayon que le premier cercle, la surface de contact du palier de sécurité étant agencée pour venir en contact avec le rotor en réponse à la fermeture du jeu axial.

8. Machine selon l'une quelconque des revendications 1 à 7, dans laquelle le palier de sécurité (104) comprend un palier de contact de roulement (108) comprenant un anneau extérieur supporté par un châssis de la machine, un anneau intérieur tournant et des éléments de roulement entre les anneaux intérieur et extérieur.

9. Machine selon la revendication 8, dans laquelle le palier de sécurité comprend un ou plusieurs roulements à billes agences pour pouvoir supporter une charge axiale.

10. Machine selon la revendication 8 ou 9, dans laquelle le palier de sécurité comprend un élément de manchon comprenant :

   - une première partie (109) située radialement entre l'anneau intérieur et le rotor, et
   - une deuxième partie (110) située axialement entre le palier de contact de roulement et la surface de contact (107) du rotor,

   la deuxième partie ayant une surface venant en contact avec le rotor en réponse à la fermeture du jeu axial.

11. Machine selon l'une quelconque des revendications 1 à 10, dans laquelle les paliers principaux (103) sont des paliers magnétiques sans contact.

12. Machine selon l'une quelconque des revendications 1 à 11, où la machine est une machine électrique, et le rotor est un rotor de la machine électrique, et le stator est un stator de la machine électrique.

13. Machine selon l'une quelconque des revendications 1 à 12, où la machine comprend :

   - une chambre (431) ayant une entrée (432) et une sortie (433) pour le fluide à déplacer, et
   - une roue (434) reliée au rotor (401) et placée dans la chambre pour déplacer le fluide.

**Figure 1**

$$\Delta v_1 = \omega_R R_{R1} - \omega_B R_B$$

$$\Delta v_2 = \omega_R R_{R2} - \omega_B R_B$$

**Figure 2a**
**Prior art**

**Figure 2b**

**Figure 3**

**Figure 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4629261 A
- WO 2012152539 A1